# EUROPEAN PATENT SPECIFICATION

(11) **EP 3 285 511 B1**
(45) Date of publication and mention of the grant of the patent: **29.07.2020**
(21) Application number: 15889124.2
(22) Date of filing: 22.12.2015
(51) Int. Cl.: H04W 8/08, H04W 4/02, H04W 92/06, H04W 64/00, H04W 84/04, H04L 29/08

(54) **GATEWAY APPARATUS, WIRELESS COMMUNICATION SYSTEM, COMMUNICATION METHOD**
GATEWAY-VORRICHTUNG, DRAHTLOSKOMMUNIKATIONSSYSTEM, KOMMUNIKATIONSVERFAHREN
APPAREIL DE PASSERELLE, SYSTÈME DE COMMUNICATION SANS FIL, PROCÉDÉ DE COMMUNICATION

(30) Priority: 15.04.2015 JP 2015083180
(43) Date of publication of application: 21.02.2018
(73) Proprietor: NEC Corporation, Tokyo 108-8001 (JP)
(72) Inventor: KUWANO, Hiroaki, Tokyo 108-8001 (JP)
(74) Representative: MacDougall, Alan John Shaw
(86) International application number: PCT/JP2015/006391
(87) International publication number: WO 2016/166786

(56) References cited:
- WO-A1-2007/002303
- US-A1- 2011 256 875
- "3rd Generation Partnership Project; Technical Specification Group Radio Access Network; Stage 2 functional specification of User Equipment (UE) positioning in UTRAN (Release 12)", 3GPP STANDARD ; TECHNICAL SPECIFICATION ; 3GPP TS 25.305, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG6, no. V12.1.0, 19 December 2014 (2014-12-19), pages 1-81, XP051294073, [retrieved on 2014-12-19]
- "3rd Generation Partnership Project; Technical Specification Group Radio Access Network; UTRAN architecture for 3G Home Node B (HNB); Stage 2 (Release 12)", 3GPP STANDARD ; TECHNICAL SPECIFICATION ; 3GPP TS 25.467, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG3, no. V12.3.0, 24 December 2014 (2014-12-24), pages 1-91, XP051294120, [retrieved on 2014-12-24]
- QUALCOMM INCORPORATED: 'PCAP Support for SAS-Centric HNB Self-Positioning' 3GPP TSG-RAN WG3#83BIS R3- 140753, [Online] 31 March 2014, XP050795444 Retrieved from the Internet: <URL:http://www.3gpp.org/ ftp/tsg_ran/WG3_Iu/TSGR3_83bis/Docs/R3-1407 53. zip>
- QUALCOMM INCORPORATED: 'Stage 2 UTRAN Support of Positioning by HNBs' 3GPP TSG-RAN WG3#83BIS R3- 140752, [Online] 31 March 2014, XP050795443 Retrieved from the Internet: <URL:http://www.3gpp.org/ ftp/tsg_ran/WG3_Iu/TSGR3_83bis/Docs/R3-1407 52. zip>

## Description

### Technical Field

The present invention relates to a gateway device, a radio communication system, and a communication method.

### Background Art

In 3GPP (3rd Generation Partnership Project), LCS (LoCation Services) which is a service for notifying a client of positional information about a terminal is standardized. Details of methods of the LCS are defined in NPL 1 to NPL 6 in the specifications of 3GPP.

When the LCS is implemented by a femto system composed of an HNB (Home NodeB; femto base station) and an HNB-GW (Home NodeB - Gateway), the HNB needs to implement a PCAP (Positioning Calculation Application Part) protocol and communicate with SAS (Standalone SMLC (Serving Mobile Location Center)) using the PCAP protocol. The SAS is a node having a role in generating positional information about a terminal. The SAS can generate the positional information about the terminal by using, for example, a GPS (Global Positioning System). In this case, the SAS provides the terminal with information necessary for GPS positioning, calculates the position of the terminal based on the result of GPS positioning in the terminal, and generates the positional information about the terminal.

However, in NPL 1 to NPL 6, the method for implementing the LCS in the femto system in the manner described above is unclear. Meanwhile, in 3GPP Release 12, a method in which an HNB-GW relays a PCAP protocol message between an HNB and an SAS is additionally defined in NPL 7 and NPL 8 in the specifications of 3GPP.

Accordingly, a carrier that has introduced the SAS for a macro base station adapts the HNB to support the LCS of the method defined in the above-mentioned Release 12, and connects the HNB to the SAS through the HNB-GW, thereby making it possible to implement the LCS in the femto system. Specifically, when the HNB is adapted to support the LCS, the PCAP protocol and a PUA (PCAP User Adaption) protocol are implemented and processing defined in the above-mentioned Release 12 is added. Further, there is an advantage that processing for generating positional information for the macro base station and processing for generating positional information for the HNB can be integrated into SAS by implementing the LCS using the femto system.

### Citation list

### Non patent literature

[NPL 1]3GPP TS 23.271 V12.1.0 (2014-06): Functional stage 2 description of Location Services (LCS)
[NPL 2]3GPP TS 25.305 V12.1.0 (2014-12): Stage 2 functional specification of User Equipment (UE) positioning in UTRAN
[NPL 3]3GPP TS 25.413 V12.3.0 (2014-12): UTRAN Iu interface Radio Access Network Application Part (RANAP) signalling
[NPL 4]3GPP TS 25.451 V12.0.0 (2014-09): UTRAN Iupc interface layer 1
[NPL 5]3GPP TS 25.452 V12.0.0 (2014-09): UTRAN Iupc interface: signalling transport
[NPL 6]3GPP TS 25.453 V12.2.0 (2014-12): UTRAN Iupc interface Positioning Calculation Application Part (PCAP) signalling
[NPL 7]3GPP TS 25.467 V12.3.0 (2014-12): UTRAN architecture for 3G Home Node B (HNB); Stage 2
[NPL 8]3GPP TS 25.470 V12.2.0 (2014-12): UTRAN Iuh interface PCAP User Adaption (PUA) signaling
[NPL 9]3GPP TS 23.032 V12.0.0 (2014-09): Universal Geographical Area Description (GAD)

WO 2007/002303 discloses user equipment (UE) communicating with a radio access network (RAN) which sends, to a network entity (e.g., an MSC/SGSN) a request for periodic reporting of the UE location to a client entity. For each instance of location reporting, the UE sends location information to the RAN, and the RAN then sends the location estimate for the UE to the MSC/SGSN, which forwards the location estimate toward the client entity.

3GPP: "Technical Specification Group Radio Access Network; Stage 2 functional specification of User Equipment (UE) positioning in UTRAN (Release 12)"; TS 25.305; 19 December 2014; 3GPP Mobile Competence Centre, 650 Route des Lucioles, Sophia-Antipolis, Cedex, specifies the UE positioning function of UTRAN, which provides the mechanisms to support the calculation of the geographical position of a UE. The specification defines the UTRAN UE positioning architecture, functional entities and operations to support positioning methods.

### Summary of Invention

### Technical Problem

However, the related art has the following problems in the implementation of the LCS using the femto system.
- A number of HNBs that do not support the LCS of the method defined in 3GPP Release 12 have been introduced into the market, and thus it is difficult to adapt the HNBs that have already been introduced into the marked to support the LCS of the method defined in the above-mentioned Release 12. Accordingly, it is difficult to generate positional information about a terminal located in each cell of the HNBs.
- If the PCAP protocol and the PUA protocol are implemented in HNBs which will be introduced into the market in the future, the cost of the HNBs increases.

Accordingly, the related art has the following problems to be solved. That is, even when the LCS is not supported by a base station that has already been introduced into the market, it has to be solved how positional information about a terminal located in a cell of the base station can be generated, and an increase in cost of a base station which will be introduced into the market in the future so as to implement the LCS can be prevented.

Therefore, an object of the present invention is to provide a HNB-GW, a radio communication system, and a communication method which can solve any one of the above-mentioned problems.

### Solution to Problem

The invention is directed to a Home Node B Gateway, HNB-GW, according to claim 1 and to a communication method performed by a HNB-GW according to claim 10. Preferred embodiments are set out in the dependent claims.

In one aspect, a gateway device is a HNB-GW that connects a HNB, which does not support a PCAP protocol and a PUA protocol, to a core network. The HNB-GW includes: a communication unit configured to communicate with the HNB, a core network device in the core network, and a positional information generation device; and a control unit configured to control the communication unit. The control unit is configured to receive a positional information request about a terminal from the core network device, terminate the positional information request without transferring the positional information request to the HNB, transmit, to the positional information generation device, information for specifying a cell in which the terminal is located, or a HNB forming the cell, as information necessary for generating the positional information about the terminal, receive the positional information about the terminal from the positional information generation device, and transmit, to the core network device, the positional information about the terminal received from the positional information generation device.

In another aspect, a radio communication system includes: a terminal; a HNB configured to perform radio communication with the terminal and which does not support a PCAP protocol and a PUA protocol; a HNB-GW substantially as described above; a core network device disposed in the core network; and a positional information generation device configured to generate positional information about the terminal. The positional information generation device is configured to receive, from the HNB-GW, information for specifying a cell in which the terminal is located, or a HNB forming the cell as information necessary for generating the positional information about the terminal, to generate the positional information about the terminal based on the information, and transmit the positional information about the terminal to the HNB-GW.

In still another aspect, a communication method is a communication method to be performed by a HNB-GW that connects a HNB, which does not support a PCAP protocol and a PUA protocol, to a core network. The communication method includes: receiving, from a core network device in the core network, a positional information request about a terminal, terminating the positional information request without transferring the positional information request to the HNB, and transmitting, to a positional information generation device, information for specifying a cell in which the terminal is located, or a HNB forming the cell, as information necessary for generating positional information about the terminal; and receiving, from the positional information generation device, the positional information about the terminal, and transmitting, to the core network device, the positional information about the terminal received from the positional information generation device.

### Advantageous Effects of Invention

According to the above-mentioned aspects, an advantageous effect that, even when the LCS is not supported by a base station that has already been introduced into the market, positional information about a terminal located in a cell of the base station can be generated is obtained. Another advantageous effect that it is possible to prevent an increase in cost of a base station that will be introduced into the market in the future so as to implement the LCS can be obtained.

### Brief Description of Drawings

Fig. 1 is a diagram showing a configuration example of a radio communication system according to a first embodiment;
Fig. 2 is a diagram showing a configuration example of a gateway device according to the first embodiment;
Fig. 3 is a sequence diagram showing an operation example of the radio communication system according to the first embodiment;
Fig. 4 is a diagram showing a configuration example of a radio communication system according to a second embodiment;
Fig. 5 is a diagram showing a configuration example of an HNB-GW according to the second embodiment;
Fig. 6 is a sequence diagram showing an operation example of the radio communication system according to the second embodiment; and
Fig. 7 is a sequence diagram showing an operation example of the radio communication system according to the second embodiment.

### Description of Embodiments

Embodiments of the present invention will be described below with reference to the drawings.

### (1) First Embodiment

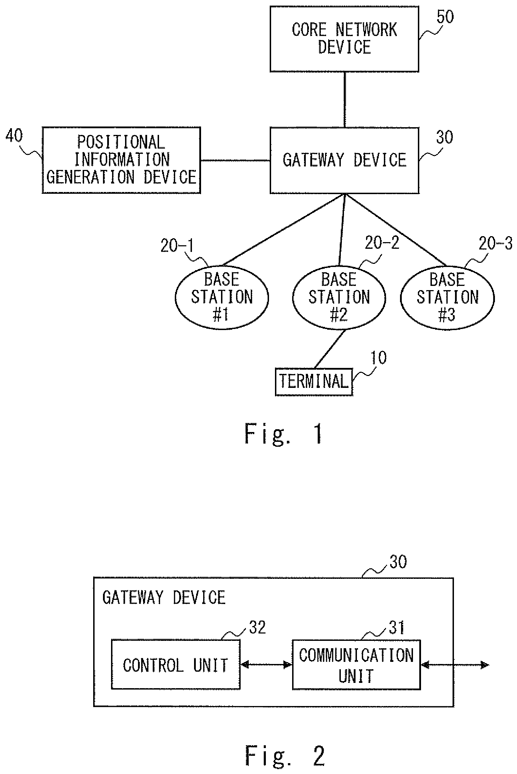

Fig. 1 shows a configuration example of a radio communication system according to this embodiment. Referring to Fig. 1, the radio communication system according to this embodiment includes a terminal 10, base stations (#1 to #3) 20-1 to 20-3, a gateway device 30, a positional information generation device 40, and a core network device 50. Fig. 1 shows an example in which three base stations (#1 to #3) 20-1 to 20-3 that are subordinate to the gateway device 30 are provided. However, the number of base stations that are subordinate to the gateway device 30 is not limited, as long as a plurality of base stations are provided. In the following description, when any one of the base stations (#1 to #3) 20-1 to 20-3 is not specified, the base station may be referred to as the base station 20.

The terminal 10 is a terminal that performs radio communication with the base stations (#1 to #3) 20-1 to 20-3 in each cell of the base stations (#1 to #3) 20-1 to 20-3.

Each of the base stations (#1 to #3) 20-1 to 20-3 is a base stations that performs radio communication with the terminal 10 located in the cell of the corresponding base station, and the base station is, for example, an HNB. In Fig. 1, the terminal 10 is located in the cell of the base station (#2) 20-2.

The gateway device 30 is a gateway device that connects the base stations (#1 to #3) 20-1 to 20-3 to the core network, and the gateway device is, for example, an HNB-GW.

The positional information generation device 40 is a node that has a role in generating positional information about the terminal 10, and the positional information generation device is, for example, an SAS.

The core network device 50 is a node that is disposed in the core network and transmits, to the gateway device 30, a positional information request for requesting the positional information about the terminal 10.

Upon receiving the positional information request about the terminal 10 from the core network device 50, the gateway device 30 terminates the positional information request without transferring the positional information request to the base station 20, and transmits, to the positional information generation device 40, information necessary for generating the positional information about the terminal 10.

For example, in a case where the base stations (#1 to #3) 20-1 to 20-3 have an extremely small cell radius, such as, the HNB (the cell radius of the HNB is about several tens of meters), if a cell in which the terminal 10 is located, or the base station 20 that forms the cell, can be specified, the positional information generation device 40 can calculate, as the position of the terminal 10, a small cell range of the cell in which the terminal 10 is located, and can generate the positional information with a high accuracy.

Accordingly, the gateway device 30 can transmit, to the positional information generation device 40, information for specifying, for example, the cell in which the terminal 10 is located, or the base station 20 that forms the cell, as information necessary for generating the positional information about the terminal 10.

The positional information generation device 40 receives, from the gateway device 30, the information necessary for generating the positional information about the terminal 10, calculates the position of the terminal 10 based on the information, generates the positional information about the terminal 10, and sends back the generated positional information about the terminal 10 to the gateway device 30. For example, upon receiving, from the gateway device 30, information for specifying the cell in which the terminal 10 is located, or the base station 20 that forms the cell, as the information necessary for generating the positional information about the terminal 10, the positional information generation device 40 specifies the cell in which the terminal 10 is located, or the base station 20 that forms the cell, based on the information, and calculates, as the position of the terminal 10, the cell range of the cell in which the terminal 10 is located.

Upon receiving the positional information about the terminal 10 from the positional information generation device 40, the gateway device 30 sends back the positional information about the terminal 10 received from the positional information generation device 40 to the core network device 50.

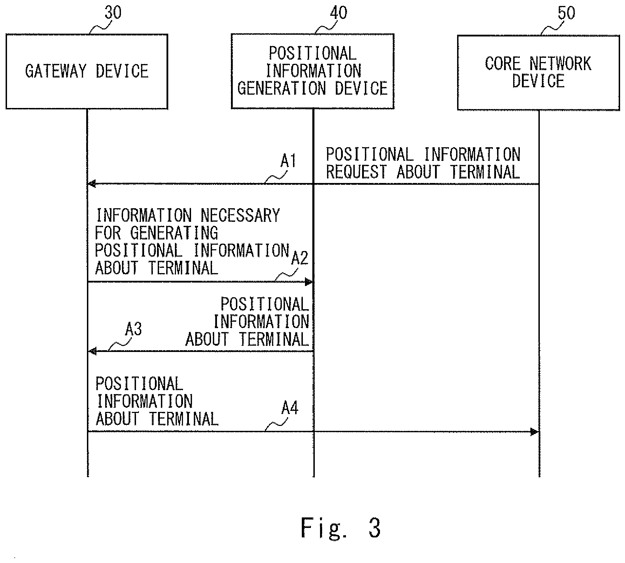

Fig. 2 shows a configuration example of the gateway device 30. Referring to Fig. 2, the gateway device 30 includes a communication unit 31 and a control unit 32. The communication unit 31 communicates with the base stations (#1 to #3) 20-1 to 20-3, the positional information generation device 40, and the core network device 50. The control unit 32 performs various processes by controlling the communication unit 31. The content of the processes performed by the control unit 32 will be described below with reference to Fig. 3.

Note that components other than the gateway device 30 shown in Fig. 1 can be implemented with the configuration of the related art, and thus detailed descriptions thereof are omitted.

An operation example of the radio communication system according to this embodiment will be described below with reference to Fig. 3.

Referring to Fig. 3, the core network device 50 transmits the positional information request about the terminal 10 to the gateway device 30 (step A1).

In the gateway device 30, the control unit 32 receives, from the core network device 50, the positional information request about the terminal 10 through the communication unit 31, and terminates the positional information request without transferring the positional information request to the base station 20. Further, the control unit 32 transmits, to the positional information generation device 40, information necessary for generating the positional information about the terminal 10, through the communication unit 31 (step A2).

The positional information generation device 40 receives, from the gateway device 30, the information necessary for generating the positional information about the terminal 10, calculates the position of the terminal 10 based on the information, generates the positional information about the terminal 10, and sends back the generated positional information about the terminal 10 to the gateway device 30 (step A3).

In the gateway device 30, the control unit 32 receives, from the positional information generation device 40, the positional information about the terminal 10 through the communication unit 31, and sends back the positional information about the terminal to the core network device 50 through the communication unit 31 (step A4).

As described above, in this embodiment, upon receiving the positional information request about the terminal 10 from the core network device 50, the gateway device 30 terminates the positional information request without transferring the positional information request to the base station 20. Further, the gateway device 30 transmits, to the positional information generation device 40, information necessary for generating the positional information about the terminal 10, and sends back the positional information about the terminal 10, which is sent back from the positional information generation device 40, to the core network device 50.

Thus, in this embodiment, the gateway device 30 that has received the positional information request about the terminal 10 provides the positional information generation device 40 with the information necessary for generating the positional information about the terminal 10, and causes the positional information generation device 40 to generate the positional information about the terminal 10. Accordingly, in the case of generating the positional information about the terminal 10, the base station 20 that forms the cell in which the terminal 10 is located does not exchange information with the positional information generation device 40, and thus there is no need for the base station 20 to support the LCS. Therefore, even when the base station 20 that has already been introduced into the market does not support the LCS, the positional information about the terminal 10 located in the cell of the base station 20 can be generated.

Further, there is no need for a base station, which will be introduced into the market in the future so as to implement the LCS, to implement the PCAP protocol and the PUA protocol so that the base station is adopted to support the LCS. This prevents an increase in cost.

### (2) Second Embodiment

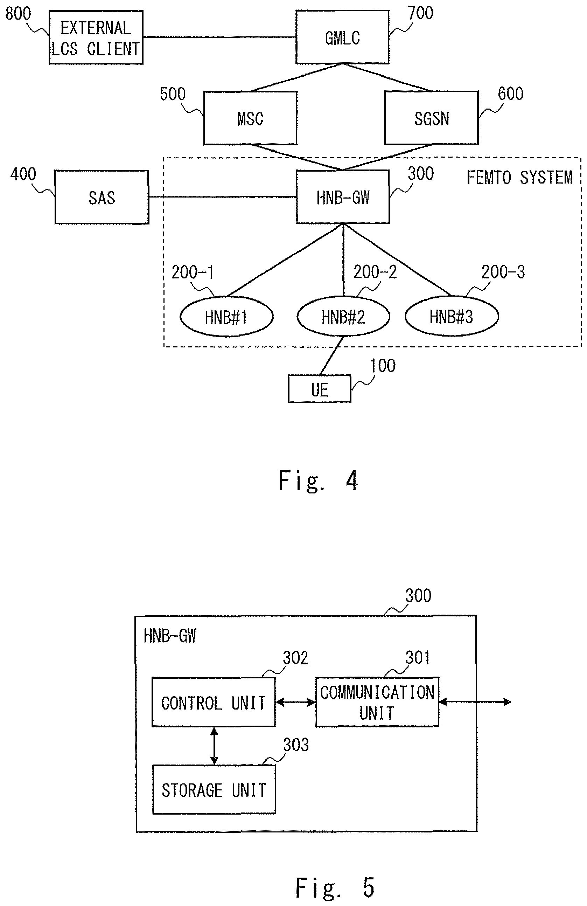

This embodiment is an example in which the radio communication system according to the first embodiment is applied to a radio communication system of 3G. Fig. 4 shows a configuration example of the radio communication system according to this embodiment. Referring to Fig. 4, the radio communication system according to this embodiment includes a UE (User Equipment) 100, HNBs (#1 to #3) 200-1 to 200-3, an HNB-GW 300, an SAS 400, an MSC (Mobile services Switching Center) 500, an SGSN (Serving GPRS Support Node, GPRS: General Packet Radio Service) 600, a GMLC (Gateway Mobile Location Center) 700, and an external LCS client (External LCS Client) 800. Fig. 4 illustrates an example in which three HNBs (#1 to #3) 200-1 to 200-3 and the HNB-GW 300 constitute a femto system. However, the number of HNBs constituting the femto system is not limited to three, as long as a plurality of HNBs are provided. In the following description, when there is no need to specify any one of the HNBs (#1 to #3) 200-1 to 200-3, the HNBs may be referred to as the HNB 200.

The UE 100 is a terminal that performs radio communication with the HNBs (#1 to #3) 200-1 to 200-3 in each cell of the HNBs (#1 to #3) 200-1 to 200-3.

Each of the HNBs (#1 to #3) 200-1 to 200-3 is a base station that performs radio communication with the UE 100 that is located in the cell of the corresponding base station. In Fig. 4, the UE 100 is located in the cell of the HNB (#2) 200-2.

The HNB-GW 300 is a gateway device that connects the HNBs (#1 to #3) 200-1 to 200-3 to the core network.

The SAS 400 is a node that has a role in generating positional information about the UE 100, and the SAS is an example of a positional information generation device.

The external LCS client 800 is a node that requires the positional information about the UE 100, and the external LCS client is used in, for example, a police station, a fire station, or the like.

The GMLC 700 is a node that accepts the positional information request about the UE 100 from the external LCS client 800. Upon receiving the positional information request about the UE 100 from the external LCS client 800, the GMLC 700 transmits, the positional information request about the UE 100 to the MSC 500 or the SGSN 600.

The MSC 500 is a node that is located in the core network, performs mobility control of the UE 100, and controls a CS (Circuit Switched) call, and the MSC is an example of a core network device.

The SGSN 600 is a node that is located in the core network, performs mobility control of the UE 100, like the MSC 500, and controls a PS (Packet Switched) call, and the SGSN is an example of a core network device.

Upon receiving the positional information request about the UE 100 from the GMLC 700, the MSC 500 and the SGSN 600 transmits the positional information request about the UE 100 to the HNB-GW 300.

In this case, the SAS 400 has a role in generating the positional information about the UE 100. The SAS 400 can generate the positional information by using, for example, a GPS. In this case, the SAS 400 provides the UE 100 with information necessary for GPS positioning, and generates the positional information about the UE 100 based on the result of GPS positioning in the UE 100. Originally, in the 3GPP, the HNB-GW 300 transfers the positional information request about the UE 100 received from the MSC 500 or the SGSN 600 to the HNB (#2) 200-2 of the cell in which the UE 100 is located, and then relays the exchange of messages between the HNB (#2) 200-2 and the SAS 400.

However, since the HNBs (#1 to #3) 200-1 to 200-3 have an extremely small cell radius (about several tens of meters), the SAS 400 can calculate, as the position of the UE 100, a small cell range of the cell in which the UE 100 is located, only by specifying the cell in which the UE 100 is located, thereby making it possible to generate the positional information with a high accuracy.

Further, when the UE 100 is located in the cell of any one of the HNBs (#1 to #3) 200-1 to 200-3 subordinate to the HNB-GW 300, the HNB-GW 300 registers the UE 100. Therefore, the HNB-GW 300 recognizes that the UE 100 is located in the cell of the HNB (#2) 200-2.

Accordingly, upon receiving the positional information request about the UE 100, the HNB-GW 300 can provide the SAS 400 with information necessary for generating the positional information about the UE 100, i.e., information for specifying the cell of the HNB (#2) 200-2 or the HNB (#2) 200-2, without the need for performing any communication with the HNB (#2) 200-2 of the cell in which the UE 100 is located.

Accordingly, upon receiving the positional information request about the UE 100 from the MSC 500 or the SGSN 600, the HNB-GW 300 terminates the positional information request without transferring the positional information request to the HNB (#2) 200-2, and transmits, to the SAS 400, the information for specifying the cell in which the UE 100 is located, or the HNB (#2) 200-2 forming the cell.

Upon receiving, from the HNB-GW 300, the information for specifying the cell in which the UE 100 is located, or the HNB (#2) 200-2 forming the cell, as the information necessary for generating the positional information about the UE 100, the SAS 400 calculates, as the position of the UE 100, the cell range of the cell of the HNB (#2) 200-2 in which the UE 100 based on the information, generates the positional information about the UE 100, and sends back the generated positional information about the UE 100 to the HNB-GW 300.

When the positional information about the UE 100 is sent back from the SAS 400, the HNB-GW 300 sends back the positional information about the UE 100 to the MSC 500 or the SGSN 600.

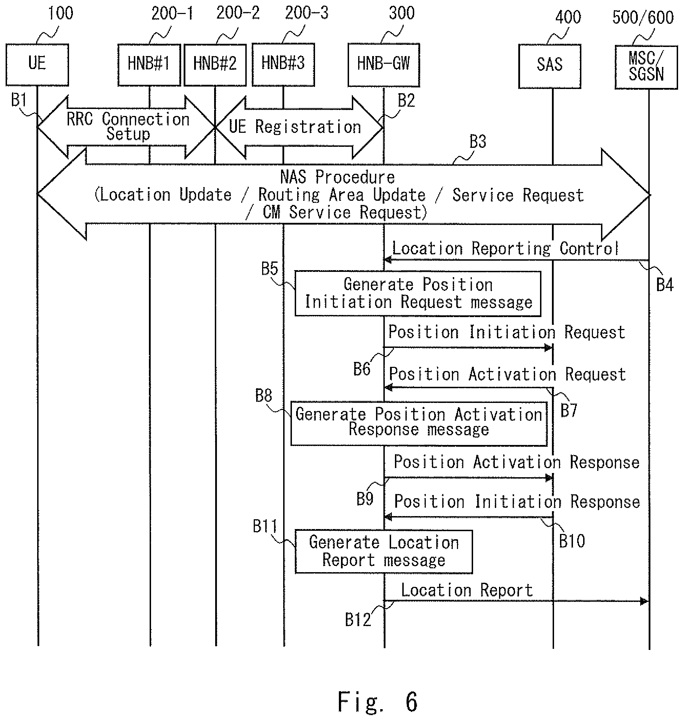

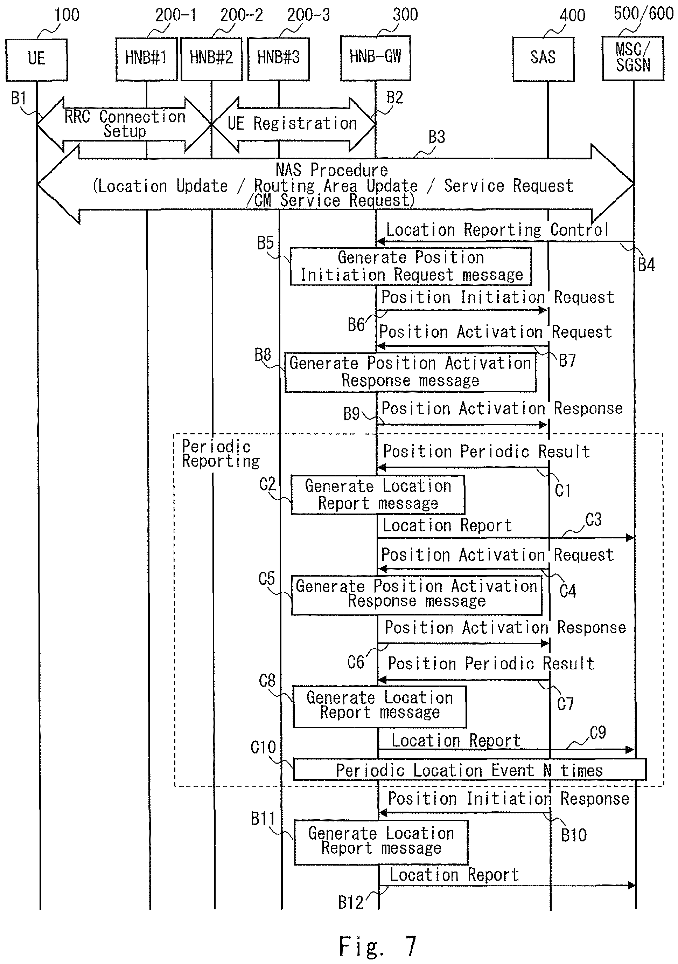

Fig. 5 shows a configuration example of the HNB-GW 300. Referring to Fig. 5, the HNB-GW 300 includes a communication unit 301, a control unit 302, and a storage unit 303. The communication unit 301 performs communication with the HNBs (#1 to #3) 200-1 to 200-3, the SAS 400, the MSC 500, and the SGSN 600. The storage unit 303 stores various pieces of information. The control unit 302 performs various processes by controlling the communication unit 301 and the storage unit 303. The content of the processes performed by the control unit 302 will be described below with reference to Figs. 6 and 7.

Note that components other than the HNB-GW 300 shown in Fig. 4 can be implemented with the configuration of the related art, and thus detailed descriptions thereof are omitted.

An operation example of the radio communication system according to this embodiment will be described below with reference to Figs. 6 and 7. In the following description, assume that the information for specifying the cell in which the UE 100 is located, or the HNB 200 forming the cell, is a cell ID (identity).

Referring to Fig. 6, when the UE 100 is located in the cell of the HNB (#2) 200-2, first, RRC Connection Setup processing for establishing an RRC (Radio Resource Control) connection between the UE 100 and the HNB (#2) 200-2 is performed (step B1).

Next, UE Registration processing for registering the UE 100 in the HNB-GW 300 is performed between the HNB (#2) 200-2 and the HNB-GW 300 (step B2). The UE Registration processing allows the control unit 302 of the HNB-GW 300 to recognize that the UE 100 is located in the cell of the HNB (#2) 200-2 and causes the storage unit 303 to store the cell ID of the cell of the HNB (#2) 200-2 as the cell ID of the cell in which the UE 100 is located.

Next, NAS (Non Access Stratum) Procedure processing (Location Update/Routing Area Update/Service Request/CM Service Request) for establishing a connection among the UE 100, the MSC 500, and the SGSN 600 through the HNB (#2) 200-2 and the HNB-GW 300 (step B3) is performed. The NAS Procedure processing allows the MSC 500 and the SGSN 600 to recognize that the UE 100 is located in the cell subordinate to the HNB-GW 300. Further, the control unit 302 of the HNB-GW 300 causes the storage unit 303 to store information about the connection established among the UE 100, the MSC 500, and the SGSN 600. Note that in the above embodiment, the NAS Procedure processing is performed among the UE 100, the MSC 500, and the SGSN 600. However, if the UE 100 is a terminal that treats only CS calls, the NAS Procedure processing is performed between the UE 100 and the MSC 500, and if the UE 100 is a terminal that treats only PS calls, the NAS Procedure processing is performed between the UE 100 and the SGSN 600.

In this case, if the external LCS client 800 requires the positional information about the UE 100, the external LCS client 800 transmits the positional information request for requesting the positional information about the UE 100 to the GMLC 700. Next, the GMLC 700 transmits the positional information request about the UE 100 to the MSC 500 or the SGSN 600. The positional information request may be transmitted to either the MSC 500 or the SGSN 600. However, if the UE 100 is a terminal that treats only CS calls, the positional information request is transmitted to the MSC 500, and if the UE 100 is a terminal that treats only PS calls, the positional information request is transmitted to the SGSN 600. Next, the MSC 500 or the SGSN 600 transmits a Location Reporting Control message for requesting the positional information about the UE 100 to the HNB-GW 300 to which the cell in which the UE 100 is subordinate (step B4). The Location Reporting Control message includes, for example, information indicating whether or not to periodically report the positional information about the UE 100. The Location Reporting Control message is transmitted using the connection established by the NAS Procedure processing in step B3.

The technique describes above is a technique standardized in 3GPP, while this embodiment proposes the following technique.

In the HNB-GW 300, when the communication unit 301 receives the Location Reporting Control message from the MSC 500 or the SGSN 600, the control unit 302 causes the storage unit 303 to store the information included in the Location Reporting Control message. In this case, the storage unit 303 stores the information about the connection established among the UE 100, the MSC 500, and the SGSN 600 during the NAS Procedure processing in step B3. Accordingly, the control unit 302 can specify the UE 100 based on the connection used for transmitting the Location Reporting Control message. Next, the control unit 302 generates a Position Initiation Request message for requesting the positional information about the UE 100 (step B5). Specifically, the control unit 302 includes, in the Position Initiation Request message, information indicating whether or not to periodically report the positional information about the UE 100, for example, in accordance with the Location Reporting Control message. Further, the control unit 302 transmits the Position Initiation Request message to the SAS 400 through the communication unit 301 (step B6).

Upon receiving the Position Initiation Request message from the HNB-GW 300, the SAS 400 transmits a Position Activation Request message for starting the generation of the positional information about the UE 100 to the HNB-GW 300 (step B7). The Position Activation Request message includes, for example, information indicating information (the cell ID of the cell in which the UE 100 is located) necessary for generating the positional information about the UE 100.

In the HNB-GW 300, when the communication unit 301 receives the Position Activation Request message from the SAS 400, the control unit 302 causes the storage unit 303 to store the information included in the Position Activation Request message. In this case, the storage unit 303 stores the cell ID of the cell of the HNB (#2) 200-2 as the cell ID of the cell in which the UE 100 is located, during the UE Registration processing in step B2. Accordingly, the control unit 302 includes the cell ID of the cell of the HNB (#2) 200-2 in a Position Activation Response message as a response message to the Position Activation Request message in step B7 (step B8). Further, the control unit 302 transmits the Position Activation Response message to the SAS 400 through the communication unit 301 (step B9).

The subsequent operation varies depending on the Location Reporting Control message in step B4 that indicates whether or not to periodically report the positional information about the UE 100. Assume in Fig. 6 that the message indicates that the positional information about the UE 100 is not periodically reported (i.e., the positional information about the UE 100 is reported only once).

The SAS 400 stores the cell ID of the cell of the HNB 200 and the information about the cell range of the cell (including the information about the location of the cell range) in such a manner that the cell ID and the information are associated for each of the HNBs (#1 to #3) 200-1 to 200-3. Upon receiving the Position Activation Response message from the HNB-GW 300, the SAS 400 extracts the cell ID of the cell of the HNB (#2) 200-2 included in the Position Activation Response message. The SAS 400 calculates, as the position of the UE 100, the cell range of the cell of the HNB (#2) 200-2 corresponding to the extracted cell ID. Further, the SAS 400 includes, in a Position Initiation Response message, which is a response message to the Position Initiation Request message in step B6, the information about the cell range of the cell of the HNB (#2) 200-2 as the positional information about the UE 100. Then, the SAS 400 transmits the Position Initiation Response message to the HNB-GW 300 (step B10).

In the HNB-GW 300, when the communication unit 301 receives the Position Initiation Response message from the SAS 400, the control unit 302 causes the storage unit 303 to store the information included in the Position Initiation Response message. Further, the control unit 302 extracts the positional information about the UE 100 included in the Position Initiation Response message, and generates a Location Report message for reporting the positional information about the UE 100 (step B11). Specifically, the control unit 302 includes, in the Location Report message, the positional information about the UE 100 extracted from the Position Initiation Response message. Further, the control unit 302 transmits the Location Report message to the MSC 500 or the SGSN 600 from the communication unit 301 (step B12).

Note that in NPL 9, the following seven coordinate formats for representing the positions of cells and UEs.
- Ellipsoid Point
- Ellipsoid Point with uncertainty Circle
- Ellipsoid Point with uncertainty Ellipse
- Polygon
- Ellipsoid Point with Altitude
- Ellipsoid Point with altitude and uncertainty ellipsoid
- Ellipsoid Arc

Accordingly, the SAS 400 includes, in a message, information about the position of a cell represented by one of the seven formats mentioned above as the positional information about the UE 100, and transmits the message to the HNB-GW 300. The HNB-GW 300 includes, in the message, the positional information about the UE 100 received from the SAS 400, without converting the format of the information, and transmits the message to the MSC 500 or the SGSN 600.

Although not shown, upon receiving the Location Report message from the HNB-GW 300, the MSC 500 or the SGSN 600 transmits the positional information about the UE 100 included in the Location Report message to the external LCS client 800 through the GMLC 700.

The above embodiment has been described assuming that, as shown in Fig. 6, the Location Reporting Control message in step B4 indicates that the positional information about the UE 100 is not periodically reported (i.e., the positional information about the UE 100 is reported only once).

An operation example in which the Location Reporting Control message in step B4 indicates that the positional information about the UE 100 is periodically reported will be described below with reference to the sequence diagram of Fig. 7.

Referring to Fig. 7, a sequence for periodically reporting the positional information about the UE 100 corresponds to a sequence in which step C1 to C10 are added between step B9 and step B10 shown in Fig. 6. Accordingly, the processing of steps B1 to B9 is first carried out in the same manner as in Fig. 6.

Upon receiving the Position Activation Response message from the HNB-GW 300, the SAS 400 generates a Position Periodic Result message for notifying periodic results of the positional information about the UE 100, substantially in the same manner as in step BI0 shown in Fig. 6. Specifically, the SAS 400 includes, in the Position Periodic Result message, information about the cell range of the cell of the HNB (#2) 200-2 about the positional information about the UE 100. Further, the SAS 400 transmits the Position Periodic Result message to the HNB-GW 300 (step C1).

In the HNB-GW 300, when the communication unit 301 receives the Position Periodic Result message from the SAS 400, the control unit 302 generates the Location Report message for reporting the positional information about the UE 100 substantially in the same manner as in step B11 shown in Fig. 6 (step C2). Specifically, the control unit 302 extracts the positional information about the UE 100 included in the Position Periodic Result message, and includes the extracted positional information about the UE 100 in the Location Report message. Further, the control unit 302 transmits the Location Report message to the MSC 500 or the SGSN 600 from the communication unit 301 (step C3).

Next, the processing of steps C4 to C9, which are similar to steps B7 to B9 and C1 to C3, is carried out, and transmits the second Location Report message to the MSC 500 or the SGSN 600 from the HNB-GW 300.

Although not shown, every time the MSC 500 or the SGSN 600 receives the Location Report message from the HNB-GW 300, the MSC 500 or the SGSN 600 reports the positional information about the UE 100 included in the Location Report message to the external LCS client 800 through the GMLC 700.

After that, the processing of steps C4 to C9 is repeatedly performed, and when N (N is a natural number equal to or greater than 2) in total of Location Report messages are transmitted from the HNB-GW 300 to the MSC 500 or the SGSN 600 (step C10), the process shifts to step B10. Fig. 7 shows an example where N=2.

After that, the processing of steps B10 to B12 is performed in the same manner as in Fig. 6. However, in Fig. 7, the SAS 400 has already sent the positional information about the UE 100 periodically in the Position Periodic Result message. Accordingly, there is no need to include the positional information about the UE 100 in the Position Initiation Response message in step B10 shown in Fig. 7.

As described above, in this embodiment, upon receiving the positional information request about the UE 100 from the MSC 500 or the SGSN 600, the HNB-GW 300 terminates the positional information request without transferring the positional information request to the HNB 200. Further, the HNB-GW 300 transmits the cell ID of the cell in which the UE 100 is located to the SAS 400 as the information necessary for generating the positional information about the UE 100. Then, when the information about the cell range of the cell in which the UE 100 is located is sent back from the SAS 400 as the positional information about the UE 100, the HNB-GW 300 sends back the positional information about the UE 100 to the MSC 500 or the SGSN 600.

Thus, in this embodiment, the HNB-GW 300 that has received the positional information request about the UE 100 provides the SAS 400 with the cell ID of the cell in which the UE 100 is located as the information necessary for generating the positional information about the UE 100, and causes the SAS 400 to generate the positional information about the terminal 10. Accordingly, since the HNB 200 of the cell in which the UE 100 is located does not exchange any information with the SAS 404 when the positional information about the UE 100 is generated, there is no need for the HNB 200 to support the LCS. Therefore, even when the LCS is not supported by the HNB 200 that has already been introduced into the market, the positional information about the UE 100 located in the cell of the HNB 200 can be generated.

Further, there is no need for an HNB which will be introduced into the market in the future to implement the PCAP protocol and the PUA protocol so that the HNB is adapted to support the LCS. This prevents an increase in cost.

While the present invention has been described above with reference to the embodiments, the present invention is not limited to the above embodiments. The configuration and details of the present invention can be modified in various ways that can be understood by those skilled in the art without the scope of the invention.

For example, the term "positional information" is used in the second embodiment. However, the whole or a part of the "positional information" may be replaced by "location information". For example, the "positional information" to be exchanged between the HNB-GW 300 and the MSC 500 or the SGSN 600, between the MSC 500 or the SGSN 600 and the GMLC 700, and between the GMLC 700 and the external LCS client 800 may be replaced by "location information".

While the second embodiment illustrates an example in which the femto base station (HNB) is used, the present invention is not limited to this example. In particular, the present invention can be suitably applied to a base station having a small cell radius.

### Reference Signs List

10 TERMINAL
20-1 - 20-3 BASE STATION (#1 - #3)
30 GATEWAY DEVICE
31 COMMUNICATION UNIT
32 CONTROL UNIT
40 POSITIONAL INFORMATION GENERATION DEVICE
50 CORE NETWORK DEVICE
100 UE
200-1 - 200-3 HNB (#1 - #3)
300 HNB-GW
301 COMMUNICATION UNIT
302 CONTROL UNIT
303 STORAGE UNIT
400 SAS
500 MSC
600 SGSN
700 GMLC
800 EXTERNAL LCS CLIENT

## Claims

1. A Home Node B Gateway, HNB-GW, (30, 300) adapted to connect a Home Node B, HNB, (20, 200), which does not support a Positioning Calculation Application Part, PCAP, protocol and a PCAP User Adaption, PUA, protocol, to a core network, the HNB-GW (30, 300) comprising:
a communication unit (32, 302) configured to communicate with the HNB (20, 200), a core network device (50, 500) in the core network, and a positional information generation device (40, 400); and
a control unit (31, 301) configured to control the communication unit (32, 302),
wherein the control unit (31, 301) is configured to receive a positional information request about a terminal (10, 100) from the core network device (50, 500), terminate the positional information request without transferring the positional information request to the HNB (20, 200), transmit, to the positional information generation device (40, 400), information for specifying a cell in which the terminal (10, 100) is located, or a HNB (20, 200) forming the cell, as information necessary for generating the positional information about the terminal (10, 100), receive the positional information about the terminal (10, 100) from the positional information generation device (40, 400), and transmit, to the core network device (50, 500), the positional information about the terminal (10, 100) received from the positional information generation device (40, 400).

2. The HNB-GW (30, 300) according to Claim 1, wherein
when the positional information request received from the core network device (50, 500) instructs to periodically report the positional information about the terminal (10, 100), the control unit (32, 301) is configured to instruct the positional information generation device (40, 400) to periodically report the positional information about the terminal (10, 100), and
every time the control unit (32, 302) receives the positional information about the terminal (10, 100) from the positional information generation device (40, 400), the control unit (32, 302) is configured to transmit, to the core network device (50, 500), the positional information about the terminal (10, 100) received from the positional information generation device (40, 400).

3. The HNB-GW (30, 300) according to Claim 1 or 2, wherein the control unit (32, 302) is configured to transmit, to the positional information generation device (40, 400), a cell ID of a cell in which the terminal (10, 100) is located, as information necessary for generating the positional information about the terminal (10, 100).

4. The HNB-GW (30, 300) according to any of claims 1 to 3, wherein the control unit (32, 302) is configured to receive, from the positional information generation device (40, 400), information about a cell range of a cell in which the terminal (10, 100) is located, as the positional information about the terminal (10, 100).

5. A radio communication system comprising:
a terminal (10, 100);
a HNB (20, 200) configured to perform radio communication with the terminal (10, 100) and which does not support a PCAP protocol and a PUA protocol;
a HNB-GW (30, 300) according to claim 1;
a core network device (50, 500) disposed in the core network; and
a positional information generation device (40, 400) configured to generate positional information about the terminal (10, 100),
wherein the positional information generation device (40, 400) is configured to receive from the HNB-GW (30, 300), information for specifying a cell in which the terminal (10, 100) is located, or a HNB (20, 200) forming the cell as information necessary for generating the positional information about the terminal (10, 100), to generate the positional information about the terminal (10, 100) based on the information, and to transmit the positional information about the terminal (10, 100) to the HNB-GW (30, 300)..

6. The radio communication system according to Claim 5, wherein
when the positional information request received from the core network device (50, 500) instructs to periodically report the positional information about the terminal (10, 100), the HNB-GW (30, 300) is configured to instruct the positional information generation device (40, 400) to periodically report the positional information about the terminal (10, 100),
when the positional information generation device (40, 400) is instructed by the HNB-GW (30, 300) to periodically report the positional information about the terminal (10, 100), the positional information generation device (40, 400) is configured to periodically transmit the positional information about the terminal (10, 100) to the HNB-GW (30, 300), and
every time the HNB-GW (30, 300) receives the positional information about the terminal (10, 100) from the positional information generation device (40, 400), the HNB-GW (30, 300) is configured to transmit, to the core network device (50, 500), the positional information about the terminal (10, 100) received from the positional information generation device (40, 400).

7. The radio communication system according to Claim 5 or 6, wherein the HNB-GW (30, 300) is configured to transmit, to the positional information generation device (40, 400), a cell ID of a cell in which the terminal (10, 100) is located, as information necessary for generating the positional information about the terminal (10, 100).

8. The radio communication system according to any of claims 5 to 7, wherein the positional information generation device (40, 400) is configured to generate information about a cell range of a cell in which the terminal (10, 100) is located, as the positional information about the terminal (10, 100).

9. The radio communication system according to any one of Claims 5 to 8, wherein the HNB (20, 200) is a femto HNB.

10. A communication method to be performed by a Home Node B Gateway, HNB-GW, (30, 300) that connects a Home Node B, HNB, (20, 200), which does not support a Positioning Calculation Application Part, PCAP, protocol and a PCAP User Adaption, PUA, protocol, to a core network, the communication method comprising:
receiving, from a core network device (50, 500) in the core network, a positional information request about a terminal (10, 100), terminating the positional information request without transferring the positional information request to the HNB (20, 200), and transmitting, to a positional information generation device (40, 400), information for specifying a cell in which the terminal is located, or a HNB forming the cell as information necessary for generating positional information about the terminal (10, 100); and
receiving, from the positional information generation device (40, 400), the positional information about the terminal (10, 100), and transmitting, to the core network device (50, 500), the positional information about the terminal (10, 100) received from the positional information generation device (40, 400).

## Patentansprüche

1. Home Node B-Gateway, HNB-GW, (30,300), das dazu eingerichtet ist, einen Home Node B, HNB, (20, 200), der kein PCAP-, Positioning Calculation Application Part, Protokoll und kein PUA-, PCAP User Adaption, Protokoll unterstützt, mit einem Kernnetzwerk zu verbinden,
wobei das HNB-GW (30, 300) aufweist:
eine Kommunikationseinheit (32, 302), die dafür konfiguriert ist, mit dem HNB (20, 200), einer Kernnetzwerkeinrichtung (50, 500) im Kernnetzwerk und einer Positionsinformationserzeugungseinrichtung (40, 400) zu kommunizieren; und
eine Steuereinheit (31, 301), die dafür konfiguriert ist, die Kommunikationseinheit (32, 302) zu steuern,
wobei die Steuereinheit (31, 301) dafür konfiguriert ist, eine Positionsinformationsanforderung für ein Endgerät (10, 100) von der Kernnetzwerkeinrichtung (50, 500) zu empfangen, die Positionsinformationsanforderung abzuschließen, ohne die Positionsinformationsanforderung an den HNB (20, 200) zu übermitteln, Information zum Spezifizieren einer Zelle, in der sich das Endgerät (10, 100) befindet, oder eines HNB (20, 200), der die Zelle bildet, an die Positionsinformationserzeugungseinrichtung (40, 400) als Information zu übertragen, die zum Erzeugen der Positionsinformation über das Endgerät (10, 100) erforderlich ist, die Positionsinformation über das Endgerät (10, 100) von der Positionsinformationserzeugungseinrichtung (40, 400) zu empfangen und die Positionsinformation über das Endgerät (10, 100), die von der Positionsinformationserzeugungseinrichtung (40, 400) empfangen wurde, an die Kernnetzwerkeinrichtung (50, 500) zu übertragen.

2. HNB-GW (30, 300) nach Anspruch 1, wobei,
wenn die von der Kernnetzwerkeinrichtung (50, 500) empfangene Positionsinformationsanforderung anweist, die Positionsinformation über das Endgerät(10, 100) periodisch zu melden, die Steuereinheit (32, 301) dafür konfiguriert ist, die Positionsinformationserzeugungseinrichtung (40, 400) anzuweisen, die Positionsinformation über das Endgerät (10, 100) periodisch zu melden, und
jedes Mal, wenn die Steuereinheit (32, 302) die Positionsinformation über das Endgerät (10, 100) von der Positionsinformationserzeugungseinrichtung (40, 400) empfängt, die Steuereinheit (32, 302) dafür konfiguriert ist, die von der Positionsinformationserzeugungseinrichtung (40, 400) empfangene Positionsinformation über das Endgerät (10,100) an die Kernnetzwerkeinrichtung (50, 500) zu übertragen.

3. HNB-GW (30, 300) nach Anspruch 1 oder 2, wobei die Steuereinheit (32, 302) dafür konfiguriert ist, eine Zellen-ID einer Zelle, in der sich das Endgerät (10, 100) befindet, als Information, die zum Erzeugen der Positionsinformation über das Endgerät (10, 100) erforderlich ist, an die Positionsinformationserzeugungseinrichtung (40, 400) zu übertragen.

4. HNB-GW (30, 300) nach einem der Ansprüche 1 bis 3, wobei die Steuereinheit (32, 302) dafür konfiguriert ist, von der Positionsinformationserzeugungseinrichtung (40, 400) Information über einen Zellenbereich einer Zelle, in der sich das Endgerät (10, 100) befindet, als die Positionsinformation über das Endgerät (10, 100) zu empfangen.

5. Funkkommunikationssystem mit:
einem Endgerät (10, 100);
einem HNB (20, 200), der dafür konfiguriert ist, eine Funkkommunikation mit dem Endgerät (10, 100) auszuführen und kein PCAP-Protokoll und kein PUA-Protokoll unterstützt,
einem HNB-GW (30, 300) nach Anspruch 1;
einer Kernnetzwerkeinrichtung (50, 500), die im Kernnetzwerk angeordnet ist; und
einer Positionsinformationserzeugungseinrichtung (40, 400), die dafür konfiguriert ist, Positionsinformation über das Endgerät (10, 100) zu erzeugen,
wobei die Positionsinformationserzeugungseinrichtung (40, 400) dafür konfiguriert ist, vom HNB-GW (30, 300) Information zum Spezifizieren einer Zelle, in der sich das Endgerät (10, 100) befindet, oder eines HNB (20, 200), der die Zelle bildet, als Information zu empfangen, die zum Erzeugen der Positionsinformation über das Endgerät (10,100) erforderlich ist, um die Positionsinformation über das Endgerät (10, 100) basierend auf der Information zu erzeugen, und die Positionsinformation über das Endgerät (10, 100) an das HNB-GW (30, 300) zu übertragen.

6. Funkkommunikationssystem nach Anspruch 5, wobei,
wenn die von der Kernnetzwerkeinrichtung (50, 500) empfangene Positionsinformationsanforderung anweist, die Positionsinformation über das Endgerät (10, 100) periodisch zu melden, das HNB-GW (30, 300) dafür konfiguriert ist, die Positionsinformationserzeugungseinrichtung (40, 400) anzuweisen, die Positionsinformation über das Endgerät (10, 100) periodisch zu melden,
wenn die Positionsinformationserzeugungseinrichtung (40, 400) durch das HNB-GW (30, 300) angewiesen wird, die Positionsinformation über das Endgerät (10, 100) periodisch zu melden, die Positionsinformationserzeugungseinrichtung (40, 400) dafür konfiguriert ist, die Positionsinformation über das Endgerät (10, 100) periodisch an das HNB-GW (30, 300) zu übertragen, und
jedes Mal, wenn das HNB-GW (30, 300) die Positionsinformation über das Endgerät (10, 100) von der Positionsinformationserzeugungseinrichtung (40, 400) empfängt, das HNB-GW (30, 300) dafür konfiguriert ist, die von der Positionsinformationserzeugungseinrichtung (40, 400) empfangene Positionsinformation über das Endgerät (10,100) an die Kernnetzwerkeinrichtung (50, 500) zu übertragen.

7. Funkkommunikationssystem nach Anspruch 5 oder 6, wobei das HNB-GW (30, 300) dafür konfiguriert ist, eine Zellen-ID einer Zelle, in der sich das Endgerät (10, 100) befindet, als Information, die zum Erzeugen der Positionsinformation über das Endgerät (10, 100) erforderlich ist, an die Positionsinformationserzeugungseinrichtung (40, 400) zu übertragen.

8. Funkkommunikationssystem nach einem der Ansprüche 5 bis 7, wobei die Positionsinformationserzeugungseinrichtung (40, 400) dafür konfiguriert ist, Information über einen Zellenbereich einer Zelle, in der sich das Endgerät (10, 100) befindet, als Positionsinformation über das Endgerät (10, 100) zu erzeugen.

9. Funkkommunikationssystem nach einem der Ansprüche 5 bis 8, wobei der HNB (20, 200) ein Femto-HNB ist.

10. Kommunikationsverfahren, das durch ein Home Node B-Gateway, HNB-GW, (30, 300) ausgeführt werden soll, das einen Home Node B, HNB, (20, 200), der kein PCAP-, Positioning Calculation Application Part, Protokoll und kein PUA-, PCAP User Adaption, Protokoll unterstützt, mit einem Kernnetzwerk verbindet,
wobei das Kommunikationsverfahren aufweist:
Empfangen einer Positionsinformationsanforderung für ein Endgerät (10, 100) von einer Kernnetzwerkeinrichtung (50, 500) im Kernnetzwerk, Beenden der Positionsinformationsanforderung, ohne die Positionsinformationsanforderung an den HNB (20, 200) zu übermitteln, und Übertragen von Information zum Spezifizieren einer Zelle, in der sich das Endgerät befindet, oder eines HNB, der die Zelle bildet, als Information, die zum Erzeugen von Positionsinformation über das Endgerät (10, 100) erforderlich ist, an eine Positionsinformationserzeugungseinrichtung (40, 400); und
Empfangen der Positionsinformation über das Endgerät (10, 100) von der Positionsinformationserzeugungseinrichtung (40, 400), und Übertragen der von der Positionsinformationserzeugungseinrichtung (40, 400) empfangenen Positionsinformation über das Endgerät (10,100) an die Kernnetzwerkeinrichtung (50,500).

## Revendications

1. Passerelle de nœud B local, HNB-GW (30, 300) agencée pour connecter un nœud B local, HNB(20, 200), qui ne prend pas en charge un protocole de partie d'application de calcul de positionnement, PCAP, et un protocole d'adaptation pour utilisateur de PCAP, PUA, à un réseau central,
la HNB-GW(30, 300) comprenant:
une unité de communication (32, 302) configurée pour communiquer avec le HNB(20, 200), un dispositif de réseau central (50, 500) dans le réseau central, et un dispositif de génération d'informations de position (40, 400) ; et
une unité de commande (31, 301) configurée pour commander l'unité de communication (32, 302),
dans laquelle l'unité de commande (31, 301) est configurée pour recevoir une demande d'informations de position concernant un terminal (10, 100) depuis le dispositif de réseau central (50, 500), terminer la demande d'informations de position sans transférer la demande d'informations de position au HNB(20, 200), transmettre, au dispositif de génération d'informations de position (40, 400), des informations pour spécifier une cellule dans laquelle le terminal (10, 100) est situé, ou un HNB(20, 200) formant la cellule, en tant qu'informations nécessaires pour générer les informations de position concernant le terminal (10, 100), recevoir les informations de position concernant le terminal (10, 100) depuis le dispositif de génération d'informations de position (40, 400), et transmettre, au dispositif de réseau central (50, 500), les informations de position concernant le terminal (10, 100) reçues depuis le dispositif de génération d'informations de position (40, 400).

2. HNB-GW (30, 300) selon la revendication 1, dans laquelle
lorsque la demande d'informations de position reçue depuis le dispositif de réseau central (50, 500) ordonne de signaler périodiquement les informations de position concernant le terminal (10, 100), l'unité de commande (32, 301) est configurée pour ordonner au dispositif de génération d'informations de position (40, 400) de signaler périodiquement les informations de position concernant le terminal (10, 100), et
chaque fois que l'unité de commande (32, 302) reçoit les informations de position concernant le terminal (10, 100) depuis le dispositif de génération d'informations de position (40, 400), l'unité de commande (32, 302) est configurée pour transmettre, au dispositif de réseau central (50, 500), les informations de position concernant le terminal (10, 100) reçues depuis le dispositif de génération d'informations de position (40, 400).

3. HNB-GW (30, 300) selon la revendication 1 ou 2, dans laquelle l'unité de commande (32, 302) est configurée pour transmettre, au dispositif de génération d'informations de position (40, 400), un identifiant de cellule d'une cellule dans laquelle le terminal (10, 100) est situé, en tant qu'informations nécessaires pour générerles informations de position concernant le terminal (10, 100).

4. HNB-GW (30, 300) selon l'une quelconque des revendications 1 à 3, dans laquelle l'unité de commande (32, 302) est configurée pour recevoir, depuis le dispositif de génération d'informations de position (40, 400), des informations concernant une portée de cellule d'une cellule dans laquelle le terminal (10, 100) est situé, en tant qu'informations de position concernant le terminal (10, 100).

5. Système de radiocommunication comprenant:
un terminal (10, 100) ;
un HNB (20, 200) configuré pour réaliser une radiocommunication avec le terminal (10, 100) et qui ne prend pas en charge un protocole PCAP et un protocole PUA;
une HNB-GW(30, 300) selon la revendication 1 ;
un dispositif de réseau central (50, 500) disposé dans le réseau central ; et
un dispositif de génération d'informations de position (40, 400) configuré pour générerdes informations de position concernant le terminal (10, 100),
dans lequel le dispositif de génération d'informations de position (40, 400) est configuré pour recevoir depuis la HNB-GW(30, 300), des informations pour spécifier une cellule dans laquelle le terminal (10, 100) est situé, ou un HNB (20, 200) formant la cellule, en tant qu'informations nécessaires pour générer les informations de position concernant le terminal (10, 100), générer les informations de position concernant le terminal (10, 100) sur la base des informations, et transmettre les informations de position concernant le terminal (10, 100) à la HNB-GW (30, 300).

6. Système de radiocommunication selon la revendication 5, dans lequel
lorsque la demande d'informations de position reçue depuis le dispositif de réseau central (50, 500) ordonne de signaler périodiquement les informations de position concernant le terminal (10, 100), la HNB-GW (30, 300) est configurée pour ordonner au dispositif de génération d'informations de position (40, 400) de signaler périodiquement les informations de position concernant le terminal (10, 100),
lorsque le dispositif de génération d'informations de position (40, 400) reçoit l'ordre par la HNB-GW(30, 300) de signaler périodiquement les informations de position concernant le terminal (10, 100), le dispositif de génération d'informations de position (40, 400) est configuré pour transmettre périodiquement les informations de position concernant le terminal (10, 100) à la HNB-GW (30, 300), et
chaque fois que la HNB-GW(30, 300) reçoit les informations de position concernant le terminal (10, 100) depuis le dispositif de génération d'informations de position (40, 400), la HNB-GW (30, 300) est configurée pour transmettre, au dispositif de réseau central (50, 500), les informations de position concernant le terminal (10, 100) reçuesdepuis le dispositif de génération d'informations de position (40, 400).

7. Système de radiocommunication selon la revendication 5 ou 6, dans lequel la HNB-GW(30, 300) est configurée pour transmettre, au dispositif de génération d'informations de position (40, 400), un identifiant de cellule d'une cellule dans laquelle le terminal (10, 100) est situé, en tant qu'informations nécessaires pour générer les informations de position concernant le terminal (10, 100).

8. Système de radiocommunication selon l'une quelconque des revendications 5 à 7, dans lequel le dispositif de génération d'informations de position (40, 400) est configuré pour générer des informations concernant une portée de cellule d'une cellule dans laquelle le terminal (10, 100) est situé, en tant qu'informations de position concernant le terminal (10, 100).

9. Système de radiocommunication selon l'une quelconque des revendications 5 à 8, dans lequel le HNB (20, 200) est un femto-HNB.

10. Procédé de communication à réaliser par une passerelle de nœud B local, HNB-GW (30, 300) qui connecte un nœud B local, HNB (20, 200), qui ne prend pas en charge un protocole de partie d'application de calcul de positionnement, PCAP, et un protocole d'adaptation pour utilisateur de PCAP, PUA, à un réseau central, le procédé de communication comprenant :
la réception, depuis un dispositif de réseau central (50, 500) dans le réseau central, d'une demande d'informations de position concernant un terminal (10, 100), la terminaison de la demande d'informations de position sans transférer la demande d'informations de position au HNB (20, 200), et la transmission, à un dispositif de génération d'informations de position (40, 400), d'informations pour spécifier une cellule dans laquelle le terminal est situé, ou un HNB formant la cellule, en tant qu'informations nécessaires pour générer des informations de position concernant le terminal (10, 100) ; et
la réception, depuis le dispositif de génération d'informations de position (40, 400), des informations de position concernant le terminal (10, 100), et la transmission, au dispositif de réseau central (50, 500), des informations de position concernant le terminal (10, 100) reçues depuis le dispositif de génération d'informations de position (40, 400).
